# EUROPEAN PATENT SPECIFICATION

(11) **EP 1 245 375 B1**
(45) Date of publication and mention of the grant of the patent: **28.10.2009**
(21) Application number: 02006645.2
(22) Date of filing: 26.03.2002
(51) Int. Cl.: B29D 31/518, A43B 13/04

(54) **Method for manufacture of a sole**
Verfahren zur Herstellung einer Sohle
Procédé pour la fabrication d'une semelle

(30) Priority: 26.03.2001 DE 10114820
(43) Date of publication of application: 02.10.2002
(73) Proprietor: adidas International Marketing B.V., 1062 KR Amsterdam (NL)
(72) Inventor: Knoerr, Klaus, 91315 Höchstadt (DE)
(74) Representative: Hess, Peter K. G.

(56) References cited:
- EP-A- 0 219 593
- DE-A- 4 022 778
- DE-B- 1 091 902
- FR-A- 2 456 488
- US-A- 3 854 227

## Description

### 1. Technical field

The present invention relates to a method for the manufacture of a sole, in particular of a sports shoe.

### 2. The prior art

When modem shoes, in particular sports shoes, are designed, many requirements concerning the mechanical properties of the sole must be fulfilled. In running shoes, for example, good cushioning properties are required in the heel part in order to avoid fatigue or even injuries of the muscles and the joints of the wearer of the shoe due to the high ground reaction forces during ground contact with the heel. On the other hand, elastic properties are desired in particular in the forefoot part in order to support the push-off with the ball during the final phase of the step cycle to reduce the energy necessary for walking or running. Further requirements arise in particular in the case of sports shoes, where the sole must be designed so that a supination or an excessive pronation of the foot is avoided during the course of motion.

For these reasons soles of modern shoes are presently no longer manufactured from a piece of homogeneously formed material but the above mentioned biomechanical requirements are addressed by using a plurality of different materials which are combined to form a sole in conformity with the specific field of use of the shoe.

Cushioning elements in the heel part are connected with one or more supporting elements which extend - depending on the design of the respective model - in different parts of the sole. The sole can in accordance with the present application be either the overall sole of the shoe or only a midsole relevant for the biomechanical properties to which further sole layers, for example an outsole layer for an improved grip, are attached.

The US 4,642,911 is an example of a prior art document which discloses the use of two materials having different compressibilities, which are selectively combined in the forefoot part of the sole to avoid pronation or supination. When this sole is manufactured, at first two wedge-shaped elements are separately manufactured and subsequently laminated onto each other to produce the sole with the desired properties.

However, this manufacturing method according to the prior art leads to a substantial increase in the costs of manufacturing, since the different parts of the sole are at first separately manufactured and subsequently, in a further production step which is to a large extent manually performed, combined to complete the sole. Furthermore, powerful glues with dangerous solvents are typically used for laminating, which may cause considerable environmental problems during production as well as during the later disposal of the shoes. Furthermore, the use of glues negatively affects the cushioning and elastic properties of the sole and leads to an increased overall weight of the shoe.

The DE 40 22 778 is an example of a prior art document disclosing a method of manufacturing two layer rubber soles by injection moulding, wherein the raw rubber is simultaneously injected in two separated moulds, heated at a temperature which allows at least a pre-vulcanization of the two layers of the sole. The two heated moulds are separated from one another by a rubber distribution device, which has a different temperature than the two separated moulds, so that a premature pre-vulcanization of the rubber inside the distribution device is prevented. After the two layers of the sole have been injected and pre-vulcanized in the two separated moulds, the rubber distribution device separating the moulds is removed and the two layers of the sole are brought together for the final vulcanization of the two layer rubber sole.

However, this method of manufacturing leads to inhomogeneous soles, which exhibit an abrupt transition at the place of contact of the two layers of the sole. Since the two layers are usually made from materials with different mechanical properties, such as viscous versus elastic, extreme tensions arise during wearing at the place of contact, which inevitably lead to a rupture of the sole. This is a critical problem for a sports shoe sole, which is subjected to extreme mechanical stress during wearing.

It is therefore the problem of the present invention to provide a simpler and thus more cost effective method for the manufacture of complex soles from at least two different materials which overcomes the above mentioned disadvantages of the prior art.

### 3. Summary of the invention

The present invention relates to a method for the manufacture of a sole, in particular of a sports shoe, wherein at first a pre-form of the sole is produced from a first and at least one second material in a first mold by injection molding, and subsequently vulcanized to obtain the finished sole from the first and the at least one second material.

The common formation of the first and the second material by injection molding renders a subsequent manual combining of the two parts of the sole superfluous. The injection molding with several components known to the person skilled in the art allows a selective arrangement of the first and the second material in different areas of the sole, so that soles produced by the method according to the invention also meet the above discussed complex biomechanical requirements.

If suitable first and second materials are selected, the subsequent vulcanization step assures a reliable connection, which can withstand the arising forces for a long time. The use of toxic glues and the corresponding solvents is therefore no longer necessary.

In contrast to the separate manufacture of parts of the sole, which are subsequently glued to each other, the method according to the invention allows additionally by means of a controlled interdiffusion of the materials a smooth transition from one component to the other in order to obtain in certain areas of the sole a smooth change of the desired properties, for example from viscous to elastic.

According to a first embodiment, the first and second materials are simultaneously injected into the first mould, for example with an injection mould comprising two or more nozzles. Thereby, the first step of the method according to the invention is accelerated. The arrangement of the nozzles can correspond to the desired distribution of the two or more materials in the sole.

According to an alternative embodiment, the two materials are injected into the first mould one after the other. This alternative is conceivable, if for example a partial solidification of the first component is desired prior to the injection of the second component.

Preferably, the sole pre-form produced from the first and the at least one second material is vulcanized in a second mould. During vulcanization, an expansion into the final shape of the sole occurs, the extent of which is preferably defined by the second mould. Additionally, suitable means enable the determination of the pressure, the temperature and further process parameters during vulcanization in the second mould.

The selection of the first and the at least one second material depends on the respective biomechanical requirements. Preferably, the materials have different densities, in order to create areas of the sole having different hardnesses and/or stiffnesses for the selective support of the foot.

According to a further, particularly preferred embodiment, the first material has essentially elastic properties, whereas the second material has essentially viscous properties. This combination of materials allows the cost-effective manufacture of a sole according to the invention, which substantially stores in first parts the energy of the deformation of the sole and later returns it to the course of movements. In other parts the ground reaction forces are viscously cushioned, i.e. the energy is not stored, but "eliminated" by relaxational processes.

The extent of the expansion of the first and the second material during vulcanization is preferably similar in order to obtain a good bonding between the two components during vulcanization.

Further preferred embodiments of the method according to the invention are the subject matter of further dependent claims.

### 4. Short description of the drawings

In the following detailed description presently preferred embodiments of the invention are described with reference to the drawings which show:
- Fig 1:: A schematic flow diagram of the process steps according to a preferred embodiment of the method according to the invention;
- Fig 2a:: A bottom view of a sole manufactured by the method according to the invention comprising an integrally connected lateral heel cushioning part;
- Fig 2b:: A bottom view of a sole produced by the method according to the invention comprising an integrally connected medial support element in the region of the arch of the foot;
- Fig 2c:: A bottom view of a sole produced by the method according to the invention comprising an integrally connected medial supporting element in the midfoot-and forefoot region, in order to avoid an excessive pronation of the foot;
- Fig. 2d:: A bottom view of a sole produced by the method according to the invention with a schematically indicated insert of a second material in the interior of the first material.
- Fig 3a:: A side view of the sole of Fig. 2a;
- Fig 3b:: A side view of the sole from Fig. 2b;
- Fig. 3c:: A side view of the sole from Fig. 2c; and
- Fig. 3d:: A side view of the sole from Fig. 2d.

### 5. Detailed description of preferred embodiments

In the following particularly preferred embodiments of the invention as well as correspondingly manufactured soles are described with reference to a sports shoe. However, it is to be understood that the method according to the invention can also be used for other types of shoes.

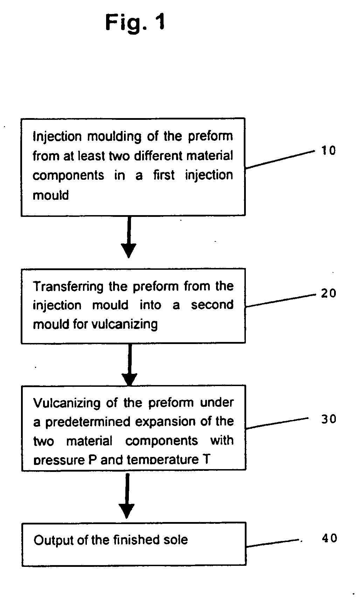

Figure 1 shows schematically the different steps of the method. In a first step 10 a pre-form is injection molded in a mould from at least two materials.

Although the following description is limited to a method where only two different materials are used, the use of further different materials is also conceivable. For example, a particularly viscous and thereby cushioning material can be injected into the heel part of the sole and a supporting element from a denser EVA (copolymer of ethylenevinylacetate) can additionally be injected into the forefoot part, whereas the main part of the sole is injection molded from normal EVA of intermediate density.

The multi-component injection moulding is well-known to the person skilled in the art of plastic processing so that a detailed description is not necessary. Methods can be used, wherein different materials are simultaneously inserted into the mould through several nozzles, or alternatively, two components are subsequently injected into the mould, for example in cases where at first a certain solidification of the first component is desired.

When the first method step 10 is terminated, the produced pre-form is transferred in step 20 into a second mould. The second mould is necessary, since during the subsequent vulcanization step the pre-form expands into the final shape of the sole 30 and the two material components acquire their desired properties (viscosity, elasticity, etc.).

Apart from the final shaping, the vulcanization step 30 which takes place at temperatures in the preferred range of 155°C - 170°C leads to a chemical bond between the different parts of the sole as a result of cross-linking of the molecules of the two materials, providing a stable mechanical interconnection. The process parameters of the vulcanization step, i.e. the pressure and the afore-mentioned temperatures as well as the duration of the vulcanization step must be adapted according to the materials used. Further, the degree of the expansion of the two materials during the step 30 is preferably controlled such that an excessive mechanical tension in the interconnection of the two components is avoided.

When the vulcanization has terminated, the finished sole is released in step 40 and can be further processed (mounting of the shoe upper and possibly further sole layers above and below the sole according to the invention) for manufacturing the shoe.

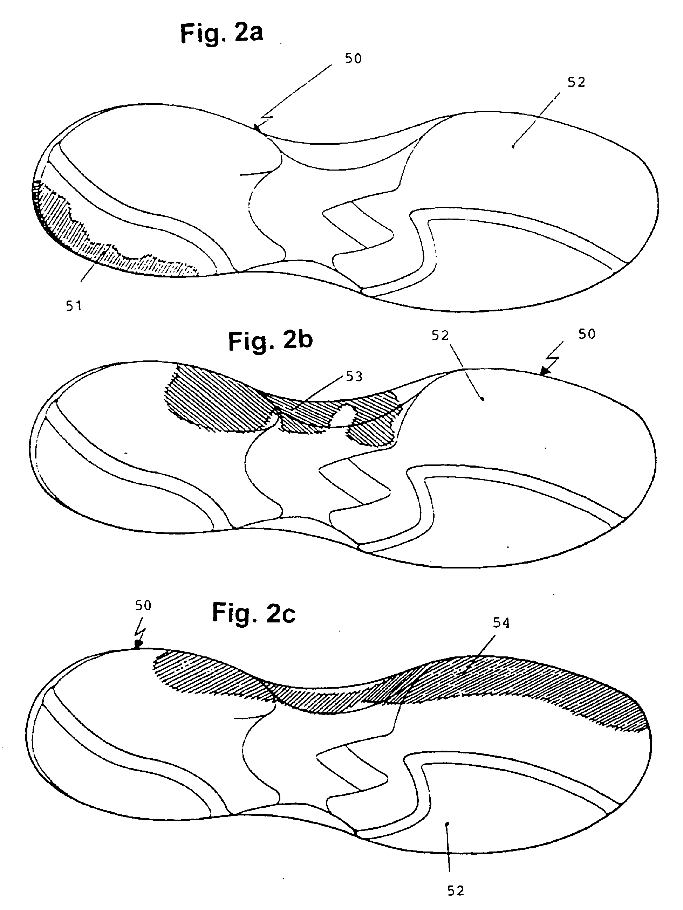

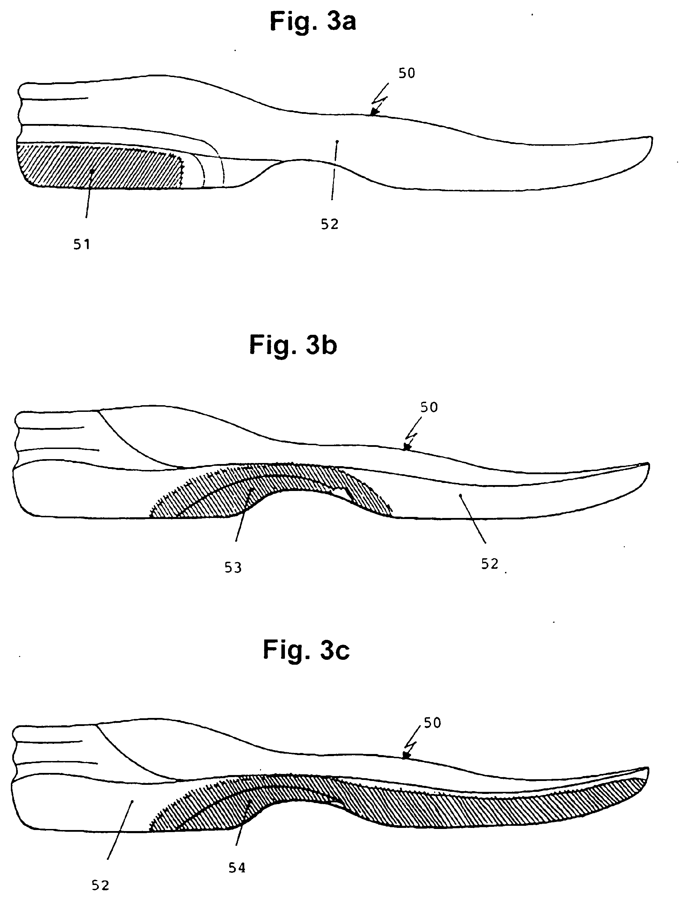

The Figures 2a - 2d show bottom views of soles 50 produced by the method according to the invention. The Figures 3a - 3d show corresponding side views. In Fig. 2a the hatched area indicates in the lateral heel part a material 51 different from the rest 52 of the sole. Preferably, this is a material having highly viscous properties to cushion the high ground reaction forces arising during ground contact with the heel. Particularly preferred is a viscous polymer composition with the following components:
A) a polymer A, having at least a
   A1)C₄ - to C₁₀-diene as monomer A1 as well
   A2)a vinylaromatic C₈ - to C₂₀-monomer as a monomer A2;
   or
B) a polymer B, having at least a
   B1) C₂ - to C₂₀-olefin as a monomer B 1,
   B2) a monomer from a C₂ - to C₁₀-vinylalcohol and C₂ - to C₁₀-carboxylic acid as a monomer B2;
   and at least one of the components C) to E)
C) a polymer C, having at least one vinylaromatic monomer;
D) a halogen comprising polymer D, having at least one C₄ - to C₁₀-diene and at least one halogen;
E) a filler;
or A) and B) together on their own, or A) and B) together with at least one of the components C) to E). Furthermore, the polymer composition according to the invention can contain the usual aids and additional compounds as for example to simplify removing the polymer composition from a mould.

All possible combinations of the component A with the components B - E are possible. Furthermore, the component B alone can be combined with the components C to E. In particular preferred combinations of the components are given by the following letter combinations: AB, AC, BC, ABC, AD, AE, AEC, ABCD, ABCDEF and ABCDE.

Furthermore, a viscous polymer composition is preferred, which contains the following components:
A) 0 to 99.9 wt-% polymer A, preferably 5 to 60 wt-%,
B) 0 to 99.9 wt-% polymer B, preferably 5 to 60 wt-%,
C) 0 to 99.9 wt-% polymer C, preferably 5 to 60 wt-%,
D) 0 to 90.4 wt-% polymer D, preferably 5 to 50 wt-%,
E) 0 to 40 wt-% fillers as component E, preferably 1 to 20 wt-%,
wherein the sum of components A - E yields 100 wt-% and wherein the polymer composition always contains at least one of the two components A and B and if it contains A or B, it contains at least one further component C to E. The amount of component F if present is up to 15 wt-%, preferably from 0.5 to 5 wt-% in relation to the remaining polymer composition.

The mentioned polymer composition has preferably an energy loss in the range of 50 to 80 %, a dynamic stiffness at 200 N to 400 N in the range of 80 to 150 N/mm, a dynamic stiffness at 1000 N to 1500 N in the range of 100 to 400 N/mm and a specific weight in the range of 0.3 to 0.8 g/cm³.

The unhatched area 52 in the sole 50, on the contrary, is in the embodiments of Fig. 2a and 3a manufactured from a common EVA, that is, preferably an EVA with the following composition: The basis is an EVA having a VA-part of 18-25%. Further components are fillers like SiO₂ and TiO₂, as well as cross-linking and processing agents and blow promoters.

The transition from one material to the other does not necessarily follow a sharp line; on the contrary an interdiffusion in adjacent areas of the two materials 51, 52 during injection moulding and/or vulcanization is possible and can be intentionally used to obtain a smooth transition from viscous, i.e. predominantly cushioning properties, to more elastic properties.

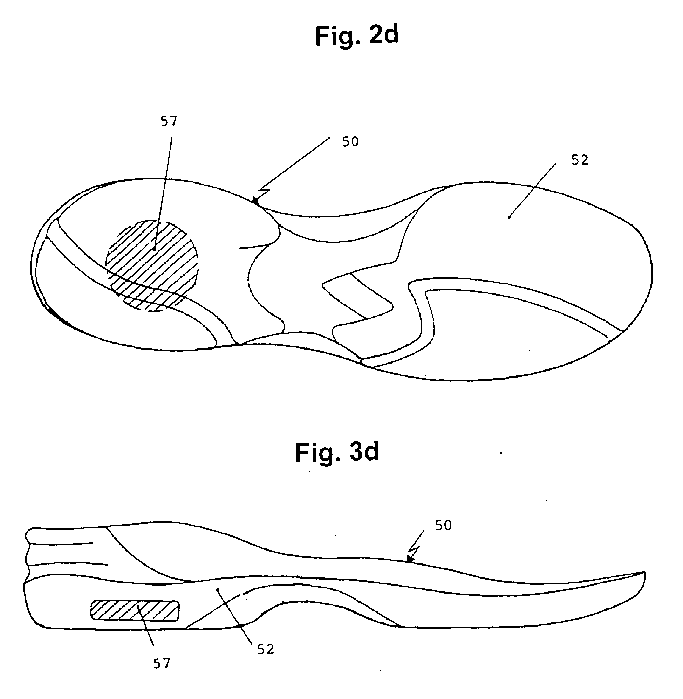

The Figures 2d and 3d show a further embodiment of a sole manufactured by the method according to the invention, wherein elastic and viscous materials are combined. As can be seen, a preferably circular insert 57 is arranged in the heel part directly below the calcaneus bone (not shown). The cushioning insert 57 "hidden" in the surrounding material 52 thus protects the heel bone during ground contact against excessive loads but at the same time is not subjected to premature wear by abrasion.

The Figs. 2b and 3b show a further example of a sole 50 manufactured according to the method of the invention. Whereas the major part 52 of the sole 50 is injection molded from an EVA having the standard density for shoe soles, the medial midfoot region comprises a simultaneously injection molded supporting element 53, which is also injection molded from an EVA, however, with a higher density. Once vulcanized in step 30, the higher density results in a higher stiffness of the supporting element compared to the other regions 52 of the sole 50 and thereby effectively supports the arch of the foot of the wearer of the shoe.

In contrast to the prior art, however, this support element 53 is not later connected to the rest 52 of the sole by gluing or similar techniques but directly integrated into the sole 50 by the method according to the invention. For an optical indication of the supporting element 53 it is possible to provide it with a different colour than the rest of the sole.

The Figs. 2c and 3c, finally, show the use of the method according to the invention for embedding a medial supporting element 54 from an EVA of higher density into the midfoot and forefoot region of the sole, in order to avoid an excessive pronation of the foot during a step cycle. The method according to the invention also allows the integration of similar supporting elements into the lateral side of the sole.

As can be seen in Figs. 3a - 3d, the multi-component injection moulding of the sole according to the invention allows also a three dimensional formation of the integrally embedded cushioning or supporting elements 51, 57, 53, 54, respectively. Thus, a corresponding arrangement of the injection nozzles during injection moulding of the pre-form assures the same level of freedom in the design and distribution of two or more different components of the sole 50 as in the separate manufacture of the components and subsequent gluing together.

## Claims

1. Method for the manufacture of a sole (50), in particular of a sports shoe, with the following steps:
a. injection moulding of a pre-form of the sole (50) from a first (52) and at least one second material (51; 53; 54; 57) in a first mould, so that by means of a controlled interdiffusion of the materials during injection moulding a smooth transition from one material to the other is obtained;
b. vulcanizing the pre-form to obtain the finished sole (50) from the first (52) and the at least one second (51; 53; 54; 57) material.

2. Method according to claim 1, wherein the first (52) and the second material (51; 53; 54; 57) are simultaneously injected into the first mould.

3. Method according to claim 1, wherein the two materials (52), (51; 53; 54; 57) are injected into the first mould one after the other.

4. Method according to one of the claims 1 to 3, wherein the pre-form is vulcanized in a second mould.

5. Method according to one of the claims 1 to 4, wherein the degree of the expansion during vulcanization of the first (52) and the second (51; 53; 54; 57) material, respectively, is essentially the same.

6. Method according to one of the claims 1 to 5, wherein the first material (52) has essentially elastic properties and the second material (51; 57) has essentially viscous properties.

7. Method according to claim 6, wherein the sole (50) comprises a heel region and wherein the second material (51; 57) is injected into the first mould so that it forms in the finished sole at least parts of the heel region.

8. Method according to claim 7, wherein the second material (57) forms a highly viscous insert in the heel region below the heel bone, which is embedded into the first material (52).

9. Method according to any of the claims 1 - 5, wherein the first (52) and the second (53; 54) material have different densities in order to obtain different hardnesses and/or stiffnesses.

10. Method according to claim 9, wherein the sole (50) comprises a midfoot region and wherein the second material (53; 54) is injected into the first mould so that it forms in the finished sole (50) at least parts of the midfoot region.

11. Method according to claim 10, wherein the sole comprises a lateral and/or a medial support region (53) and wherein the second material (53) is injected into the first mould so that it forms in the finished sole (50) the lateral and/or the medial support region (53).

## Patentansprüche

1. Verfahren zur Herstellung einer Sohle (50), insbesondere eines Sportschuhs, aufweisend:
a. Spritzgießen eines Vorformlings der Sohle (50) aus einem ersten (52) und zumindest einem zweiten Material (51; 53; 54; 57) in einer ersten Gießform, sodass durch eine kontrollierte Interdiffusion der Materialien während des Spritzgießens ein gleichmäßiger Übergang von einem Material zu dem anderen realisiert wird;
b. Vulkanisieren des Vorformlings um die fertige Sohle (50) aus dem ersten (52) und zumindest einem zweiten (51; 53; 54; 57) Material zu bekommen.

2. Verfahren gemäß Anspruch 1, wobei das erste (52) und das zweite Material (51; 53; 54; 57) gleichzeitig in die erste Gießform spritzgegossen werden.

3. Verfahren gemäß Anspruch 1, wobei die zwei Materialien (52), (51; 53; 54; 57) eins nach dem anderen in die erste Gießform spritzgegossen werden.

4. Verfahren gemäß einer der Ansprüche 1 bis 3, wobei der Vorformling in einer zweiten Gießform vulkanisiert wird.

5. Verfahren gemäß einer der Ansprüche 1 bis 4, wobei der Grad der Aufweitung während des Vulkanisierens des ersten (52), beziehungsweise des zweiten (51; 53; 54; 57) Materials im Wesentlichen der gleiche ist.

6. Verfahren gemäß einer der Ansprüche 1 bis 5, wobei das erste Material (52) im Wesentlichen elastische Eigenschaften und das zweite Material (51; 57) im Wesentlichen viskose Eigenschaften hat.

7. Verfahren gemäß Anspruch 6, wobei die Sohle (50) eine Fersenregion umfasst und wobei das zweite Material (51; 57) in die erste Gießform auf eine Art spritzgegossen wird, damit es in der fertigen Sohle zumindest Teile der Fersenregion bildet.

8. Verfahren gemäß Anspruch 7, wobei das zweite Material (57) eine hochviskose Einlage in der Fersenregion unterhalb der Fersenknochen bildet, die in dem ersten Material eingebettet ist.

9. Verfahren gemäß einer der Ansprüche 1 bis 5, wobei das erste (52) und das zweite (53; 54) Material unterschiedliche Dichten haben, um unterschiedliche Härten und/oder Formsteifigkeiten zu erreichen.

10. Verfahren gemäß Anspruch 9, wobei die Sohle (50) eine Mittelfußregion umfasst und wobei das zweite Material (53; 54) in die erste Gießform spritzgegossen wird, damit es in der fertigen Sohle (50) zumindest Teile der Mittelfußregion bildet.

11. Verfahren gemäß Anspruch 10, wobei die Sohle eine seitliche und/oder eine mittlere Abstützungsregion (53) umfasst und wobei das zweite Material (53) in die erste Gießform spritzgegossen wird, damit es in der fertigen Sohle (50) die seitliche und/oder die mittlere Abstützungsregion (53) bildet.

## Revendications

1. Procédé de fabrication d'une semelle (50), en particulier pour une chaussure de sport, avec les étapes suivantes :
a. moulage par injection d'une préforme de la semelle (50) à partir d'un premier (52) et d'au moins un deuxième matériau (51 ; 53 ; 54 ; 57) dans un premier moule, de manière à obtenir une transition progressive d'un matériau à l'autre par l'intermédiaire d'une interdiffusion contrôlée des matériaux lors du moulage par injection ;
b. vulcanisation de la préforme pour obtenir la semelle finie (50) à partir du premier et du au moins un deuxième (51 ; 53 ; 54 ; 57) matériau.

2. Procédé selon la revendication 1, dans lequel le premier (52) et le deuxième (51 ; 53 ; 54 ; 57) matériau sont injectés simultanément dans le premier moule.

3. Procédé selon la revendication 1, dans lequel les deux matériaux (52), (51 ; 53 ; 54 ; 57) sont injectés dans le premier moule l'un après l'autre.

4. Procédé selon l'une des revendications 1 à 3, dans lequel la préforme est vulcanisée dans un second moule.

5. Procédé selon l'une des revendications 1 à 4, dans lequel le degré d'expansion lors de la vulcanisation du premier (52) et du deuxième (51 ; 53 ; 54 ; 57) matériau, respectivement, est essentiellement le même.

6. Procédé selon l'une des revendications 1 à 5, dans lequel le premier matériau (52) présente des propriétés essentiellement élastiques et le deuxième matériau (51 ; 57) des propriétés essentiellement visqueuses.

7. Procédé selon la revendication 6, dans lequel la semelle (50) comprend une région de talon et dans lequel le deuxième matériau (51 ; 57) est injecté dans le premier moule de manière à former dans la semelle finie au moins des parties de la région du talon.

8. Procédé selon la revendication 7, dans lequel le deuxième matériau (57) forme un insert hautement visqueux dans la région du talon au-dessous de l'os du talon, qui est noyé dans le premier matériau (52).

9. Procédé selon l'une des revendications 1 à 5, dans lequel le premier (52) et le deuxième (53 ; 54) matériau ont des densités différentes afin de donner des duretés et/ou des rigidités différentes.

10. Procédé selon la revendication 9, dans lequel la semelle (50) comprend une région de mi-pied et dans lequel le deuxième matériau (53 ; 54) est injecté dans le premier moule de manière à former dans la semelle finie (50) au moins des parties de la région de mi-pied.

11. Procédé selon la revendication 10, dans lequel la semelle comprend une région support latérale et/ou médiale (53) et dans lequel le deuxième matériau (53) est injecté dans le premier moule de manière à former dans la semelle finie (50) la région support latérale et/ou médiale.
